Europäisches Patentamt

European Patent Office

Office européen des brevets

(11) Publication number : **0 644 695 A2**

# EUROPEAN PATENT APPLICATION

(21) Application number : **94306748.8**

(51) Int. Cl.$^6$ : **H04N 7/24**

(22) Date of filing : **14.09.94**

(30) Priority : **21.09.93 US 124917**

(43) Date of publication of application :
**22.03.95 Bulletin 95/12**

(84) Designated Contracting States :
**DE FR GB IT NL**

(71) Applicant : **AT & T Corp.**
**32 Avenue of the Americas**
**New York, NY 10013-2412 (US)**

(71) Applicant : **BELL COMMUNICATIONS**
**RESEARCH, INC.**
**290 West Mt. Pleasant Avenue**
**Livingston, New Jersey 07039-2729 (US)**

(72) Inventor : **Puri, Atul**
**3660 Waldo Avenue 1A,**
**Riverdale**
**New York 10463 (US)**
Inventor : **Hafong Wong, Andria**
**5B Eaton Crest Drive**
**Eatontown, New Jersey 07724 (US)**

(74) Representative : **Buckley, Christopher Simon**
**Thirsk et al**
**AT&T (UK) LTD.,**
**AT&T Intellectual Property Division,**
**5 Mornington Road**
**Woodford Green, Essex IG8 0TU (GB)**

(54) **Spatially scalable video encoding and decoding.**

(57)   Video images of varying resolutions are derived from one video signal (VIDIN) with high
bandwidth efficiency by employing a new two-
layer video coding technique using spatial
scalability in which the prediction taken from
one layer (1140) is combined with the prediction
taken from the other layer (1180), and the com-
bined prediction is used to code one of the
layers (in 1180). In an illustrative example of the
invention employing a base-layer and an enhancement-layer, the spatially interpolated base-
layer (on 1170) is combined, by the selection of
appropriate weights, with the motion compensated temporal prediction of the enhancement
layer to generate the prediction used to encode
the enhancement-layer (in 1180). Weights are
selected based on a calculation of the sum of
the absolute differences, or the sum of the
squares of the differences between the prediction and reference macroblocks to produce the
prediction giving the best bandwidth efficiency.
This weighting process is called spatio-tem-
poral weighting.

FIG. 1

EP 0 644 695 A2

## Technical Field

This invention relates to encoding and decoding of video signals and, more particularly, to efficient encoding of video signals in a scalable manner which permits video images to be decoded in a variety of resolution scales and picture formats.

## Background

Worldwide efforts are underway to improve the quality of video signal production, transmission, and reproduction because a great deal of commercial importance is being predicted for improved quality video systems. These efforts involve, at least in part, increasing the resolution with which images are converted into representative electrical signals, typically in the form of digital bit-streams, by increasing the spatial and temporal sampling rates that are used to convert video images into electrical signals. This increase in resolution consequently means that more data about images must be produced, processed, and transmitted in a given time interval.

Video images, such as those images in the field of a television camera, are scanned at a predetermined rate and converted into a series of electrical signals, each electrical signal representing a characteristic of a predetermined region of the image generally known as a picture element, pel, or pixel. Picture elements are typically grouped into macroblocks for most video signal processing purposes where each macroblock consists of a 16 by 16 array of picture elements. A plurality of macroblocks taken together at a predetermined instant in time forms what amounts to a still picture (i.e., a frame) representing the nature of the image at the predetermined instant of time. Increasing the quality of video signals produced in this manner involves, at least in part, the use of larger number of smaller-size picture elements to represent a given image frame and the production of a larger number of image frames per unit time.

As the number of pels for each video image increases and the rate at which images are produced increases, there is an increasing amount of video data which must produced, transmitted, received and processed in a given time interval. A number of video compression schemes have been proposed which attempt to transmit higher quality video images using the same number of bits and the same bit rates used for lower quality images. The Motion Pictures Expert Group Phase 1 (MPEG-1) standard provides a particular syntax and decoding process for one such scheme. This standard is set forth in International Standards Organization (ISO) Committee Draft 11172-2, "Coding of Moving Pictures and Associated Audio for Digital Storage Media at up to 1.5 Mbits/s," November, 1991.

It may be desirable to obtain one or more lower resolution images from a single transmitted high-resolution video signal. For example, a video signal simultaneously transmitted to both high-definition television (HDTV) and standard NTSC television receivers may have to provide images having a very high degree of resolution to the HDTV receivers and images having a lesser degree of resolution to the standard receivers. Similarly, the degree of image resolution which needs to be obtained from a video signal displayed on a windowed computer screen must by varied with the size of the particular window in which it is displayed. Other applications in which multiple-resolution images are desirable include video conferencing where different video equipment may be employed at each location and video transmitted over asynchronous transfer mode (ATM) networks.

One known method of providing a video signal from which images of varying resolution may be derived is to simultaneously transmit a set of independent replicas of a video sequence, each replica being scaled for reproduction at a different level of resolution. This approach, known as "simulcasting," is simple, but it requires increased bandwidth to accommodate the transmission of multiple independent video images. A more bandwidth efficient alternative to simulcasting is scalable video. Resolution scalable video is a technique in which a video signal is coded and the resulting bit-sequence is partitioned so that a range of resolution levels may by derived from it depending upon the particular signal decoding scheme employed at the receiver.

Resolution scalable video coding may be achieved either in the spatial or frequency domain. Spatial scalability uses layered coding, typically including a base-layer and an enhancement-layer in the spatial domain, where there is a loose coupling between the layers, that is, the coding algorithms used to code the layers are independent, but the enhancement layer is coded using the reconstructed images produced by the base layer. The coding scheme used for the two layers can also be chosen independently, as can the particular methods of up and down sampling.

Unfortunately, the coding of resolution scalable video is not provided within the constraints of most video standards. A particular limitation of the MPEG-1 coding standard is its lack of provisions facilitating resolution scalable video encoding and decoding.

## Summary

Video images of varying resolutions are derived from one video signal with high bandwidth efficiency, in accordance with the principles of the invention, by employing a new two-layer video coding technique using spatial scalability in which the prediction taken from one layer is combined with the prediction taken from the other layer, and the combined prediction is used to code one of the layers.

In an illustrative example of the invention employing a base-layer and an enhancement-layer, the spatially interpolated base-layer is combined, by the selection of appropriate weights, with the motion compensated temporal prediction of the enhancement-layer to generate the prediction used to encode the enhancement-layer. Weights are selected based on a calculation of the sum of the absolute differences, or the sum of the squares of the differences between the prediction and reference macroblocks to produce the prediction giving the best bandwidth efficiency. This weighting process is called spatio-temporal weighting.

Other aspects of illustrative examples of the invention include using spatiotemporal weighting where the base-layer and enhancement-layer have particular picture formats that may be required in certain applications of the invention. For example, in one application the base-layer may need to be in an interlaced format, while in another a progressive format is required. Thus, there are four illustrative forms of spatial scalability employing aspects of the invention that result from the various combinations of base-to-enhancement-layer picture formats. These are: progressive-to-progressive, progressive-to-interlace, interlace-to-progressive, and interlace-to -interlace.

The invention provides substantial improvements over prior art techniques of resolution scalable video. For example, bandwidth efficiency is increased; an optimized set of weights can be selected for each form of spatial scalability; the layers can be coded to provide for compatibility between a number of different coding standards; and the layers may be readily prioritized for transmission on networks using multiple priorities for more robust and error-resilient transmission.

The discussion in this Summary and the following Brief Description of the Drawing, Detailed Description, and drawings merely represents examples of this invention and is not to be considered in any way a limitation on the scope of the exclusionary rights conferred by a patent which may issue from this application. The scope of such exclusionary rights is set forth in the claims at the end of this application.

## Brief Description of the Drawings

FIG. 1 shows, in simplified block diagram form, an illustrative two-layer encoder and decoder embodying aspects of the invention.

FIG. 2 shows a block diagram of the decimation operation (DEC) used in the progressive-to-progressive and progressive-to-interlace forms of spatial scalability.

FIG. 3 shows a block diagram of the interpolation operation (INTP) used in the progressive-to-progressive and progressive-to-interlace forms of spatial scalability.

FIG. 4 shows a block diagram of the decimation operation (DEC) used in the interlace-to-progressive form of spatial scalability.

FIG. 5 shows a block diagram of the interpolation operation (INTP) used in the interlace-to-progressive form of spatial scalability.

FIG. 6 shows a block diagram of the decimation operation (DEC) used in the interlace-to-interlace form of spatial scalability.

FIG. 7 shows a block diagram of the interpolation operation (INTP) used in the interlace-to-interlace form of spatial scalability.

FIG. 8 shows the details of the interlace-to-progressive interpolation operation used in interlace-to-interlace form of spatial scalability.

FIG. 9 shows the details of the interlace-to-progressive interpolation operation used in the interlace-to-progressive form of spatial scalability.

FIG. 10 shows the principles behind the weighted spatio-temporal prediction for the progressive-to-progressive and interlace-to-progressive forms of spatial scalability in accordance with an aspect of the invention.

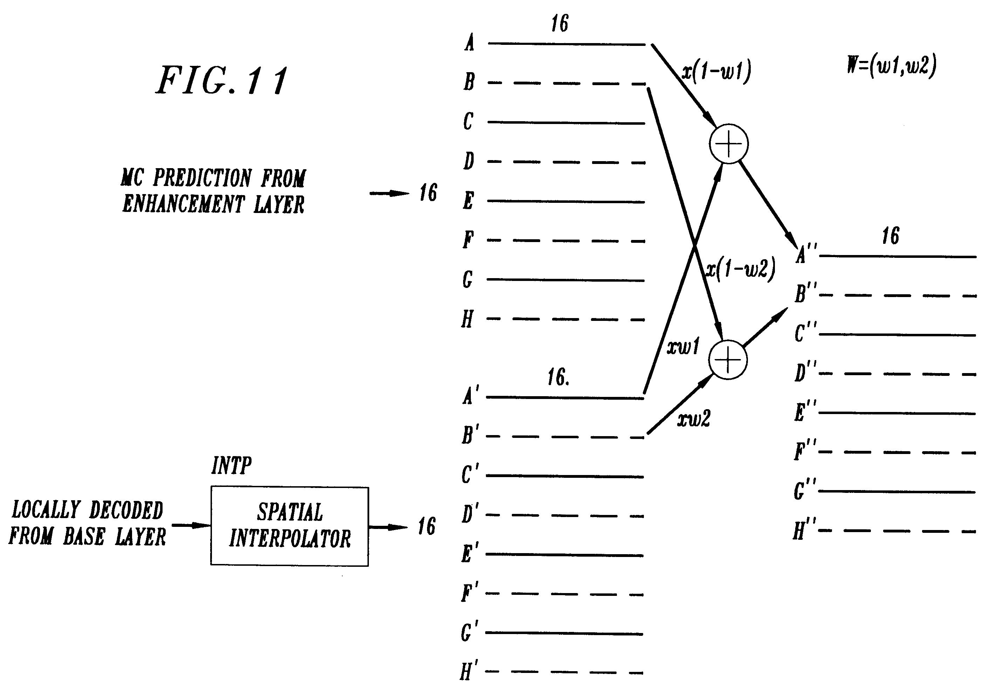

FIG. 11 shows the principles behind the weighted spatio-temporal prediction for the progressive-to-interlace and interlace-to-interlace forms of spatial scalability in accordance with an aspect of the invention.

FIG. 12 shows a diagram of the base-layer encoder and an enhancement-layer encoder used in the illustrative embodiment of FIG. 1.

FIG. 13 shows a two-layer decoder corresponding to illustrative embodiment of FIG. 1.

FIG. 14 shows a simplified block diagram of a spatio-temporal weighter embodying aspects of the invention.

FIG. 15 shows a simplified block diagram of a spatio-temporal analyzer embodying aspects of the invention.

The following abbreviations have been used in the drawings listed above:

BF-buffer
COMP - comparator
DEC - decimation
INTP - interpolation
MC - motion compensation
ME - motion estimation
mv - motion vectors
ORG- organizer
Q - quantizer
IQ - inverse quantizer
QA- quantizer adapter
T- transform (e.g., a Discrete Cosine Transform [DCT])
IT- inverse transform
VFE - variable and fixed length encoder
VFD - variable and fixed length decoder
STA - spatio-temporal analyzer

PS - previous picture store
NS - next picture store
SW - switch
WT - weighter

## Detailed Description

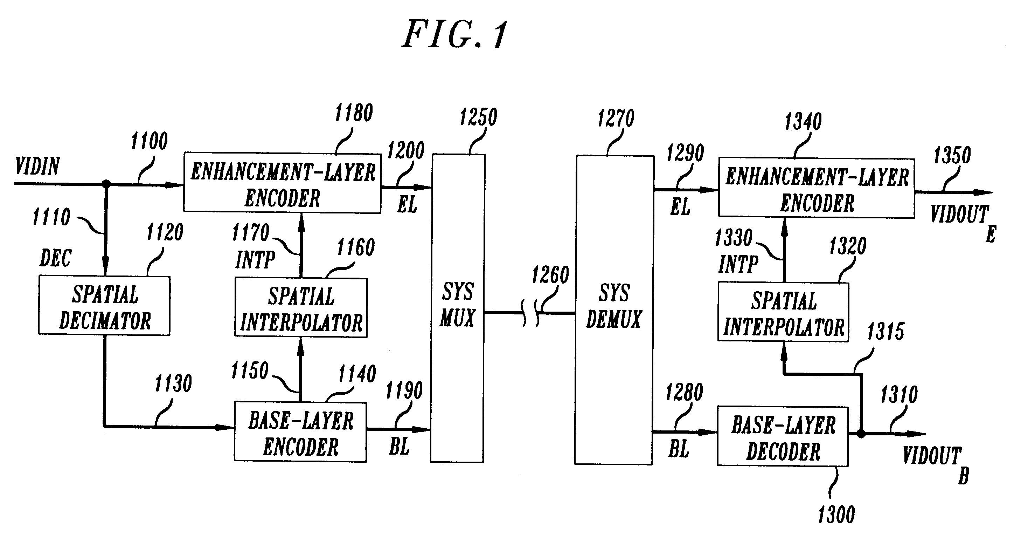

FIG. 1 shows, in simplified block diagram form, an illustrative two-layer encoder and decoder, embodying aspects of the invention, including enhancement-layer encoder 1180, base-layer encoder 1140, enhancement-layer decoder 1340, base-layer decoder 1300, and other elements. Enhancement-layer encoder 1180, base-layer encoder 1140, enhancement-layer decoder 1340, and base-layer decoder 1300, and the functions contained therein are described in detail below. High resolution video signal VIDIN enters on input line 1100 and passes to spatial decimator 1120 on line 1110, where high resolution video signal VIDIN may be low-pass filtered before spatial decimator 1120 reduces the number of picture elements to a lower resolution called the base-layer resolution. High resolution video signal VIDIN may be formatted as either interlaced or progressive. It will be appreciated by those skilled in the art that it may be desirable, in some examples of the invention, to use frame-picture coding for interlaced video signals in accordance with the Motion Picture Experts Group Phase 2 Test Model 5 Draft Version 2, Doc. MPEG93/225, April 1993 (MPEG-2). Alternatively, it may be desirable to employ field-picture coding in accordance with MPEG-2. The operation of reducing the number of picture elements is called decimation (DEC). Although decimators are well known in the art, specific methods of decimation, in accordance with aspects of the invention, are discussed in detail below. The decimated base-layer signal is then output on line 1130 and passes to base-layer encoder 1140, which outputs encoded bit-stream BL on line 1190.

Base-layer encoder 1140 also outputs a locally decoded base-layer video picture on line 1150 to spatial interpolator 1160. Spatial interpolator 1160 increases the number of pels per frame using a method of upsampling interpolation (INTP). Although interpolators are well known in the art, specific methods of upsampling interpolation, in accordance with aspects of the invention, are discussed in detail below. The upsampled enhancement-layer signal is output on line 1170 to enhancement-layer encoder 1180 which outputs encoded bit-stream EL on line 1200. Enhancement-layer encoder 1180 utilizes the upsampled signal from line 1170 as a prediction, in order to advantageously increase the efficiency of coding the high resolution video signal input on input line 100.

Encoded bit-streams BL and EL at the output of base-layer encoder 1140 and enhancement-layer encoder 1180 are combined in multiplexer 1250 in preparation for transmission on channel 1260. Alternatively, bit-streams BL and EL could be sent on two separate and independent channels. The encoding of high-resolution video signal VIDIN into bit-streams BL and EL advantageously allows the use of prioritization for transmission on networks using multiple priorities which facilitates more robust and error-resilient transmission.

If bit-streams BL and EL are multiplexed, then, after transmission on channel 1260, demultiplexer 1270 separates bit-streams BL and EL and outputs bit-streams BL and EL on lines 1290 and 1280, assuming there are no transmission errors on channel 1260.

Bit-streams BL and EL are input into base-layer decoder 1300 and enhancement-layer decoder 1340 on lines 1290 and 1280, respectively. Base-layer decoder 1300 outputs a decoded base-layer video signal $VIDOUT_B$ on line 1310, which, in the absence of transmission errors, is exactly the same as the replica decoded video signal on line 1150.

Decoded base-layer video signal $VIDOUT_B$ is also input on line 1315 to spatial interpolator 1320, which is a duplicate of interpolator 1160 and which produces an upsampled signal on line 1330. In the absence of transmission errors, the upsampled video signal on lines 1330 and 1170 are identical. Enhancement-layer decoder 1340 utilizes the upsampled video on line 1330 in conjunction with the enhancement layer bit-stream on line 1290 to produce a decoded higher resolution video signal $VIDOUT_E$ on output line 1350.

As will be appreciated by those skilled in the art that it may be desirable, in certain applications, for high resolution video input signal VIDIN at input line 1100 to be of progressive format, where as other applications it may be desirable for VIDIN to be of interlaced format. Thus, four forms of spatial scalabilities may be used to illustrate the principles of the invention that depend on the base-layer-to-enhancement-layer picture formats. The illustrative forms of spatial scalability are called progressive-to-progressive, progressive-to-interlace, interlace-to-progressive and interlace-to-interlace. Depending on the form of spatial scalability, the spatial decimation (DEC) and spatial interpolation (INTP) operations discussed above may be different. The DEC and INTP operations necessary for each of the four aforementioned forms of spatial-scalability and the potential application of each are discussed below.

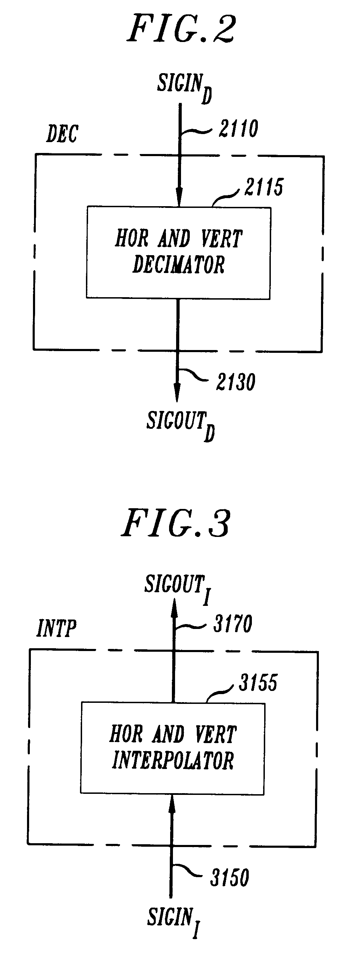

FIGS. 2 and 3 show the DEC and interpolation INTP operations required for the illustrative progressive-to-progressive and progressive-to-interlace forms of spatial scalability. As shown in FIG. 2, in the DEC operation, high resolution video signal in progressive format is input on line 2110 to horizontal and vertical decimator 2115, where high resolution video signal $SIGIN_D$ may be filtered before horizontal and vertical decimator 2115 reduces the number of picture elements contained in high resolution video signal SIGIN$_D$ in both the horizontal and vertical directions by reducing the rate at which high resolution video signal SIGIN$_D$ is sampled. The lower spatial resolution video SIGOUT$_D$ is output on line 2130. In some applications it may be desirable that no reduction in sampling rate below 1:1 occur in either the horizontal or the vertical directions. The rate at which horizontal and vertical sampler 2115 samples high resolution video signal SIGIN$_D$ is expressed as a ratio between two integers, for instance 2:1. Thus horizontal decimation requires reduction of the sampling rate by a factor of 2 horizontally.

As shown in FIG. 3, in the INTP operation, low resolution video signal SIGIN$_I$ in progressive format enters on line 3150 to horizontal and vertical interpolator 3155 which performs the inverse operation of that performed by horizontal and vertical decimator 2115 (FIG. 2). However, since a loss of spatial resolution in decimator horizontal and vertical decimator 2115 occurs, horizontal and vertical interpolator 3155 can only output an approximation of the signal at the input to decimator 2110 (FIG. 2) as SIGOUT$_I$ on line 3170.

An example of the progressive-to-progressive form of spatial scalability is a coding scheme where a Common Intermediate Format (CIF) type signal is input to base-layer encoder 1140 (FIG. 1) at a resolution of 352 horizontal x 288 vertical picture elements per progressive frame, and a Super Common Intermediate Format (SCIF) type signal is input to enhancement-layer encoder 1180 (FIG. 1) at a resolution of 704 horizontal x 576 vertical picture elements per progressive frames, where both input signals having a frame rate of 30 frames/sec. CIF and SCIF formatted signals are well known in the art. The CIF signal input to base-layer encoder 1140 (FIG. 1) is derived from the SCIF signal by spatial decimation using a factor of 2 in both the horizontal and in vertical directions. Locally decoded base-layer frames are interpolated by a factor of 2 both horizontally and vertically and are used in the prediction used to encode the signal in the enhancement-layer. Although this example requires a factor of 2 for horizontal and vertical decimation and interpolation, other integer ratios can also be advantageously used, as will be appreciated by those skilled in the art. In this example, a Motion Pictures Expert Group Phase 1 (MPEG-1) or CCITT Recommendation H.261-Video Codec for Audiovisual Services at px64 Knit/s, Geneva, August, 1990 (H.261) coding scheme is used to code the base-layer to illustrate how spatial scalability, in accordance with an aspect of the invention, can advantageously permit compatibility between the MPEG-1, or H.261, and MPEG-2 standards. It is also possible, and may be desirable in some applications to use MPEG-2 coding in both layers. For example, the base-layer may employ MPEG-2 main-profile coding and the enhancement-layer may employ MPEG-2 next-profile spatially scalable coding. Both main-profile and next-profile coding schemes are known in the art.

An example of progressive-to-interlace scalability is a coding scheme where a Source Input Format (SIF) type signal is input to base-layer encoder 1140 (FIG. 1) at a resolution of 352 horizontal x 240 vertical pictures elements per noninterlaced frame, and a Comite Consultatif International des Radiocommunications Recommendation 601, Standard 4:2:0 (CCIR-601 4:2:0) type signal is input to enhancement-layer encoder 1180 (FIG. 1) at a resolution of 704 horizontal x 480 vertical picture elements per interlaced frame. The SIF signal input to base-layer encoder 1140 (FIG. 1) is derived from the CCIR-601 4:2:0 signal by dropping the even-fields, followed by spatial decimation by factor of 2 in horizontal direction. Locally decoded base-layer frames are upsampled by a factor of 2 horizontally and vertically and used for the prediction used to encode the enhancement-layer. In this example, an MPEG-1 coding scheme is used to encode the base-layer, as in the above example, to illustrate how spatial scalability, in accordance with an aspect of the invention, can advantageously permit compatibility between the MPEG-1 and MPEG-2 standards. It is also possible, and may be desirable in some applications to use MPEG-2 coding in both layers. For example, the base-layer may employ MPEG-2 main-profile coding and the enhancement-layer may employ MPEG-2 next-profile spatially scalable coding.

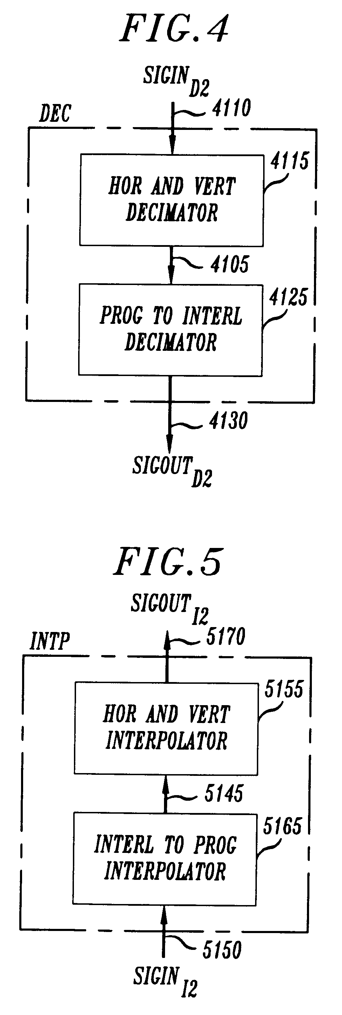

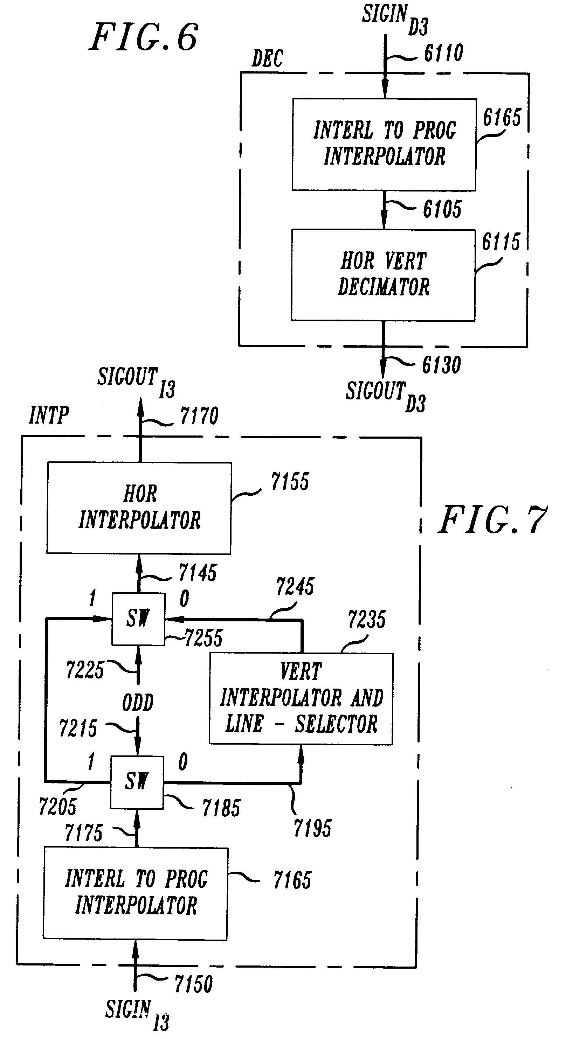

FIGS. 4 and 5 show the DEC and INTP operations required for the illustrative interlace-to-progressive form of spatial scalability. As shown in FIG. 4, in the DEC operation, high resolution video signal SIGIN$_{D2}$ is input on line 4110 to horizontal and vertical decimator 4115 which reduces the number of picture elements in the horizontal and vertical directions by reducing the rate at which the high resolution video signal is sampled. A lower spatial resolution progressive video signal is output on line 4415. In some applications, it may be desirable that the sampling rate not be reduced below 1:1 in either the horizontal or the vertical directions. The sampling rate used by horizontal and vertical decimator 4115 is expressed as a ratio between two integers, for instance 2:1. Horizontal decimation requires reduction of sampling rate by a factor of 2 horizontally. Next, progressive frames at line 4105 further undergo a progressive-to-interlace decimation operation that is well known in the art. Lower spatial resolution interlaced frames are then output on line 4130 as SIGOUT$_{D2}$.

As shown in FIG. 5, in the INTP operation, low resolution interlaced video signal SIGIN$_{I2}$ enters on line 5150 to interlace-to-progressive interpolator 5165. Progressive lower resolution frames on line 5145 are output of interlace-to-progressive interpolator 5165 and are fed as an input to horizontal and vertical interpolator 5155 which performs the inverse operation of that performed in horizontal and vertical decimator 4115 (FIG. 4). However, since a loss of spatial resolution in horizontal and vertical decimator 4115 occurs, horizontal and vertical interpolator 5155 can only output an approximation of the signal input on line 4110 (FIG. 4) to horizontal and vertical decimator 4115 (FIG. 4) on line 5170 as $SIGOUT_{I2}$.

An example of interlace-to-progressive scalability is a scalable coding scheme where the base-layer employs the main-profile coding of CCIR-601 4:2:0 resolution interlaced frames and the enhancement-layer employs progressive high definition television (HDTV) resolution frames at 60 frames/sec. CCIR-601 4:2:0 main-profile and HDTV formatted signals are well known in the art. Such interlace-to-progressive spatial scalability can be advantageously used to achieve digital progressive-HDTV compatibility with standard digital TV. In this example, MPEG-2 main-profile encoding can be employed in the base-layer and the enhancement-layer can employ MPEG-2 next-profile spatially scalable coding.

FIGS. 6 and 7 show the DEC and INTP operations of decimation required for the illustrative interlace-to-interlace form of spatial scalability. As shown in FIG. 6, for decimation of interlaced signal to generate a lower spatial resolution interlaced signal, the first step involves an interlace-to-progressive interpolation operation. Assuming, for purposes of this example, that input signal $SIGIN_{D3}$ is 30 frames/sec interlaced, so that it can be alternately viewed as 60 fields/sec interlaced video where each field contains half the lines of a frame. Interlace-to-progressive interpolator 6165 generates progressive frames from the 60 field/sec interlaced video signal input on line 6610 such that same number of lines as the interlaced frame is output at 60 frames/sec on line 6105. Following interlace-to-progressive interpolation, the signal is decimated in horizontal and vertical decimation 6115 which outputs the decimated signal on line 6130 as $SIGOUT_{D3}$. If a lower resolution interlaced signal with half the horizontal and vertical resolution as the original input signal is desired, then decimation factors of 2:1 horizontally and 4:1 vertically may be employed.

FIG. 7 shows the INTP operation used in the illustrative interlace-to-interlace form of spatial scalability. Again, for purposes of this example, lower spatial resolution interlaced signal $SIGIN_{I3}$ at 30 frames /sec is viewed as a 60 fields/sec signal. The first step is identical to that in decimation operation described above in reference to FIG. 6 in that it involves interlace-to-progressive interpolation operation on input signal $SIGIN_{I3}$ on line 7150 which results in a 60 frames/second progressive video output on line 7175. In the next step, the progressive frames generated by even-fields are available on line 7195 after passing through switch 7185 and are vertically interpolated by 1:2 and resampled by vertical interpolator and line selector 7235. The progressive frames generated by odd-fields are available on line 7205 after passing through switch 7185 and are not resampled in this step. Next, switch 7255 alternatively selects the signals on line 7205 and 7145. In the final step, the output of switch 7255 is fed via line 7145 to 1:2 horizontal interpolator 7155.

It will be helpful, at this point, to describe the interlace-to-progressive interpolation operation employed in the DEC and INTP operations in more detail. The interlace-to-progressive interpolation operation used in DEC and INTP can be quite different than that for interlace-to-interlace because, while the INTP operation is specified by the MPEG-2 standard, the DEC operation is outside of the standard and can thus be more complicated.

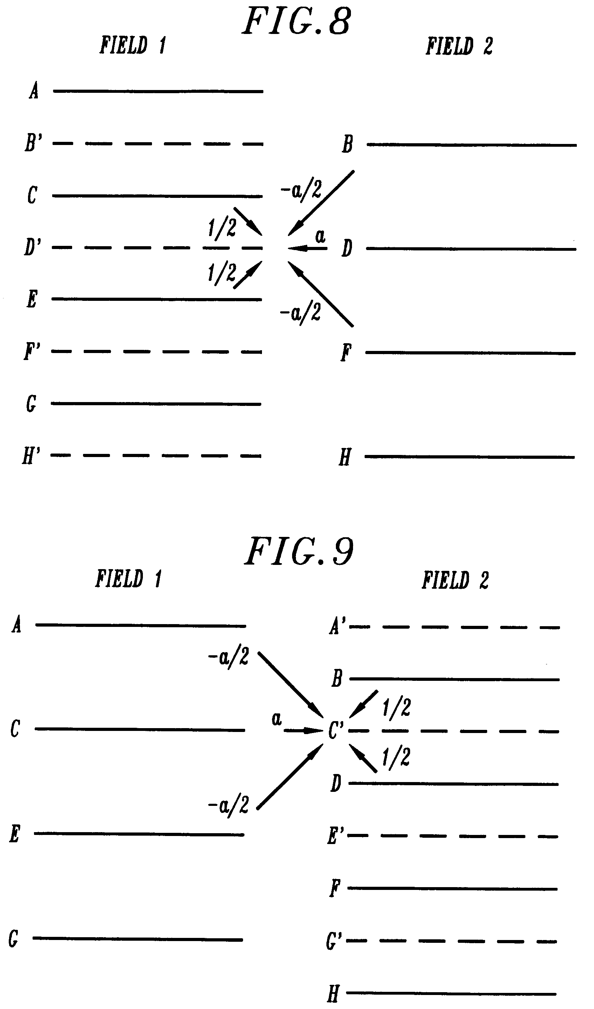

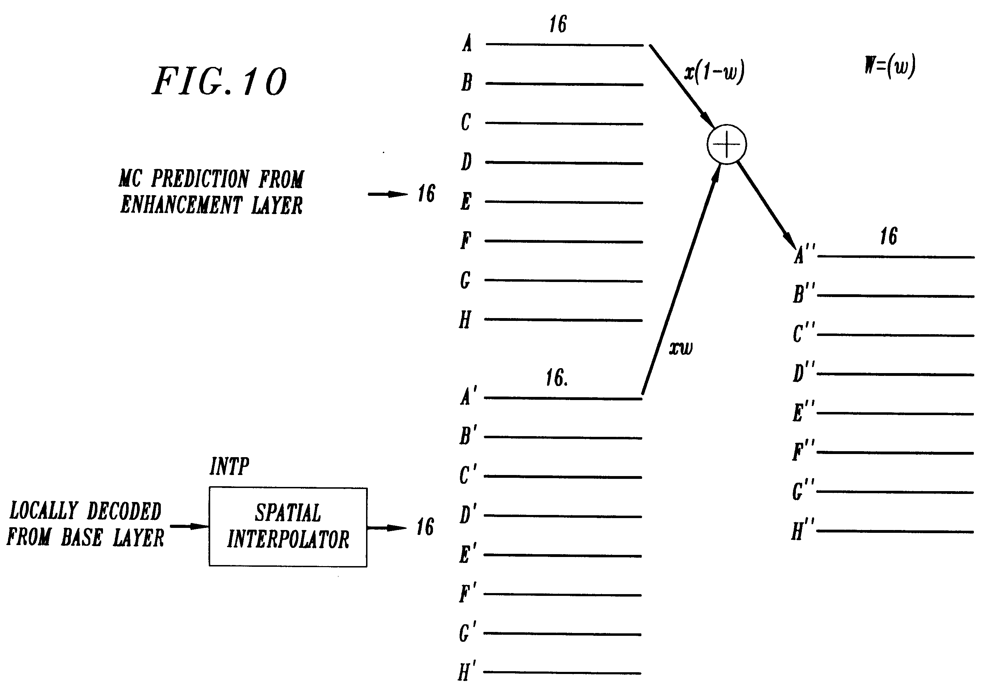

FIGS. 8 and 9 show the interlace-to-progressive interpolation operation included in the MPEG-2 standard. FIG. 8 shows interlace-to-progressive interpolation of fieldl (i.e., the odd-field), of an interlaced frame in a sequence of frames. Fig. 9 shows the interlace-to-progressive interpolation of field2 ( i.e, the even-field) of an interlaced frame in a sequence of frames.

FIG. 8 shows the details of interlace-to-progressive interpolation operation used in interlace-to-interlace form of spatial scalability. In FIG. 8, lines A, C, E, G ... belong to the odd-field and lines B', D', F',H' ... are generated by application of a filter.

FIG. 9 shows the principles behind the weighted spatio-temporal prediction for the progressive-to-progressive and interlace-to-progressive forms of spatial scalability in accordance with an aspect of the invention. In FIG. 9, lines B, D, F, H ... belong to the even-field and lines A', C', E', H' ... are generated by the application of interlace-to-progressive interpolation filter. The output of the interlace-to-progressive interpolation filter is composed of two contributions, one from the field being deinterlaced, and the other from an opposite parity field within the same frame. Both contributions are generated by applying weighting factors to samples of neighboring lines centered at the deinterlaced line to be generated, as shown by the arrows in FIGS. 8 and 9. This filtering operation thus maintains a compromise between retaining the vertical and the temporal resolution.

An example of interlace-to-interlace scalability is a scalable coding scheme where base-layer encoder 1140 (FIG. 1) encodes CCIR-601 4:2:0 resolution interlaced frames and enhancement-layer encoder 1180 (FIG. 1) encodes HDTV resolution interlaced frames. Such interlace-to-interlace spatial scalability can be advantageously used to achieve digital interlaced-HDTV compatibility with standard digital TV.

FIG. 10 shows the principles behind the weighted spatio-temporal prediction for the progressive-to-interlace and interlace-to-interlace forms of spatial scalability in accordance with an aspect of the invention. For progressive format video signals, FIG. 10 shows that the operation of the spatio-temporal weighted prediction applied to the spatial prediction is obtained by upsampling the locally-decoded picture from the base-layer and combining it with the motion-compensated temporal prediction in the enhancement-layer. The weight code W simply represents weights w, where w is the spatial weight applied to all the lines of each block. The spatio-temporal weighted prediction is obtained by weighting the spatial-prediction block by w and adding to it the temporal prediction block weighted by a factor of 1-w.

Tables 1 and 2 show spatial weights, for purposes of this example only and not as a limitation on the invention, for progressive-to-progressive and interlace-to-progressive scalability. Besides the listed weights, purely temporal prediction (i.e., a spatial weight of 0) may be used in each case.

Table 1, below, shows an example set of 2 weight codes for progressive-to-progressive and interlace-to-progressive scalability.

| w |
|---|
| 1 |
| 1/2 |

Table 2, below, shows an example set of 4 weight codes for progressive-to-progressive and interlace-to-progressive scalability

| w |
|---|
| 1 |

| 3/4 |
|------|
| 1/2 |
| 1/4 |

Tables 3 and 4 show spatial-weights, for purposes of this example only and not as a limitation on the invention, for progressive-to-interlace scalability where the base-layer encodes odd-and even-fields respectively. Besides the listed weights, purely temporal prediction (i.e., a spatial weight of (0,0)) may also be used.

Table 3, below, shows an example set of 4 weight codes for progressive-to-interlace scalability, where the base-layer encodes odd-fields.

| w1 | w2 |
|-----|-----|
| 1 | 0 |
| 1/2 | 0 |
| 1 | 1/2 |
| 1/2 | 1/2 |

Table 4, below, shows an example set of 4 weight codes for progressive-to-interlace scalability, where the base-layer encodes even-fields.

| w1 | w2 |
|-----|-----|
| 0 | 1 |
| 0 | 1/2 |
| 1/2 | 1 |
| 1/2 | 1/2 |

Tables 5 and 6 show spatial-weights, for purposes of this example only and not as a limitation on the invention, for progressive-to-interlace scalability where the base-layer encodes odd- and even-fields respectively. Besides the listed weights, purely temporal prediction (i.e., a spatial-weight of (0,0)) may be used.

Table 5, below, shows a set of 4 weight codes for progressive-to-interlace scalability where the base-layer encodes odd-fields.

| w1 | w2 |
|-----|-----|

| 1 | 1/4 |
|-----|-----|
| 3/4 | 0 |
| 3/4 | 1/2 |
| 1/2 | 1/4 |

Table 6, below, shows a set of 4 weight codes, for purposes of this example only and not as a limitation on the invention, for progressive-to-interlace scalability, where the base-layer encodes even-fields.

| 1 | 1/4 |
|-----|-----|
| 3/4 | 0 |
| 3/4 | 1/2 |
| 1/2 | 1/4 |

Tables 7 and 8 show spatial-weights, for purposes of this example only and not as a limitation on the invention, for interlace-to-interlace scalability. Besides the listed weights, a purely temporal prediction (i.e., a spatial-weight of (0,0)) may be used.

Table 7, below, shows an example set of 2 weight codes for interlace-to-interlace scalability.

| w1 | w2 |
|-----|-----|
| 1/4 | 1 |
| 0 | 3/4 |
| 1/2 | 3/4 |
| 1/4 | 1/2 |

Table 8, below, shows an example set of 4 weight codes for interlace-to-interlace scalability.

| w1 | w2 |
|-----|-----|
| 1 | 1 |
| 1/2 | 1/2 |

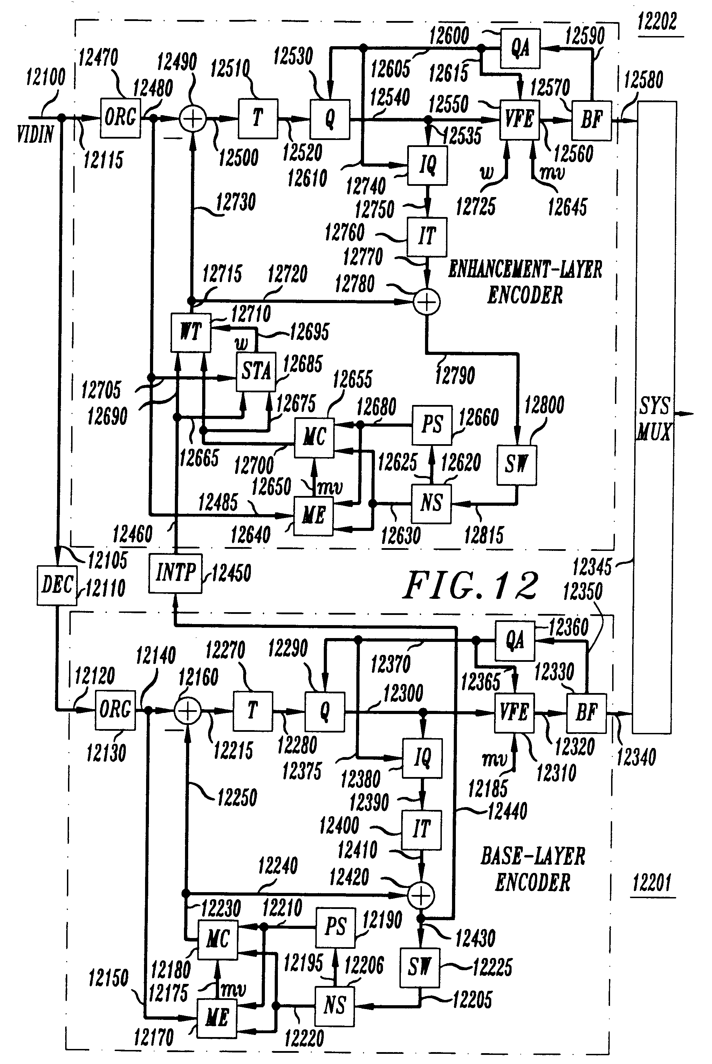

FIG. 12 shows a diagram of the base-layer encoder and an enhancement-layer encoder used in the illustrative embodiment of FIG. 1. A high resolution video signal enters on input line 12100. Spatial Decimator 12110 reduces the number of pels per frame, as described earlier when referring to FIG. 1, and outputs a base-layer signal on line 12120 to base encoder 12201. Base-layer encoder 12201 uses the well known MPEG-1 picture arrangement in which, for generality, codes I, B, and P pictures. Frame reorganizer 12130 reorders the input frames in preparation for coding in the manner well known in the art, and outputs the result on lines 12140 and 12150.

Motion estimator 12170 examines the input frame on line 12150 and compares it with one or two previously coded frames. If the input frame is of type I or P then one previous frame is used. If it is type B then two previously coded frames are used. Motion estimator 12170 outputs motion vectors on line 12175 for use by motion compensator 12180 and on line 12185 for use by variable and fixed length encoder 12310. Motion compensator 12180 utilizes motion vectors mv and pels from previously coded frames to compute (for P and B type frames) a motion compensated prediction that is output on line 12230 and passes to lines 12240 and 12250. For I type frames, motion compensator 12180 outputs zero pel values.

Subtractor 12160 computes the difference between the input frame on line 12140 and (for P and B types) the prediction frame on line 12250. The result appears on line 12215, is transformed by transformer 12270 and quantized by quantizer 12290 into typically integer values. Quantized transform coefficients pass on line 12300 to variable and fixed length encoder 12310 and on line 12305 to inverse quantizer 12380.

Inverse quantizer 12380 converts the quantized transform coefficients back to full range and passes the result via line 12390 to inverse discrete cosine transformer 12400, which outputs pel prediction error values on line 12410. Adder 12420 adds the prediction error values on line 12410 to the prediction values on line 12240 to form the coded base layer pels on lines 12430 and 12440.

For I and P type frames, switch 12225 passes the coded pels from line 12430 to the next-picture store 12200 via line 12205. Simultaneously, the frame that was in next-picture store 12206 passes via line 12195 to previous-picture store 12190. For B type frames, switch 12225 takes no action, and the contents of picture stores 12190 and 12200 remain unchanged. The contents of picture stores 12190 and 12200 pass to motion estimator 12170 and motion compensator 12180 via lines 12210 and 12220 for use as needed.

The quantizer step size QS that is used by quantizer 12290 and inverse quantizer 12380 is computed adaptively by quantization adapter 12360 depending on the buffer fullness indication on line 12350. Quantizer step size QS passes via line 12370 to quantizer 12290 and via line 12375 to inverse quantizer 12380. Quantizer step size QS also passes to variable and fixed length encoder 12310 via line 12365. Variable and fixed length encoder 12310 encodes quantized transform coefficients input on line 12300, motion vectors mv input on line 12185 and quantizer step size QS input on line 12365 into a bit-stream that is output on line 12320 into a buffer 12330 for temporary storage until it passes via line 12340 to systems multiplexer 12345. The coded base layer frames pass via line 12440 to interpolator 12450, as described above, where they are upsampled and passed to the enhancement-layer encoder 12201 via line 12460.

In enhancement-layer encoder 12202, frame organizer 12470 reorders the high resolution video frames to match the order of the base-layer and outputs reordered frames on line 12480. Subtractor 12490 computes the difference between the input picture on line 12480 that is to be coded and the spatio-temporal prediction picture on line 12460. The prediction error is output on line 12500, transformed by transformer 12510, quantized by quantizer 12530 and passed via line 12540 to variable and fixed length encoder 12550. Quantizer step size $QS_E$ used by enhancement-layer encoder 12201 is computed by quantization adapter 12600 depending on the an indication of the fullness of buffer 12570 received on line 12590. Quantizer step size $QS_E$ passes via line 12605 to quantizer 12530, via line 12610 to inverse quantizer 12740 and on line 12615 to variable and fixed length encoder 12550. Motion Estimator 12640 examines the enhancement-layer input frame on line 12485, and depending on the picture type being coded, compares it with either the previous decoded enhancement-layer frame on line 12630 or with two previous decoded enhancement-layer frames on lines 12630 and 12680. Motion Estimator 12640 outputs motion vectors $mv_E$ on line 12650 for use by motion compensator 12655 and on line 12645 for use by variable and fixed length encoder 12550. Motion Compensator 12655 utilizes motion vectors $mv_E$ to compute a motion compensated temporal prediction that is output on line 12700 and passes to weighter 12710.

The corresponding spatially interpolated base-layer decoded frame is available on line 12460 and is input to weighter 12710 on line 12690. The spatial prediction frame at the output of the base-layer interpolator 12450 is also applied to an input line 12665 of spatio-temporal weighting analyzer 12685. The temporal prediction frame at the output of the motion compensator 12655 is also applied to another input line 12675 of spatiotemporal weighting analyzer 12685. The input frame from frame organizer 12470 is fed to the third input line 12705 of spatio-temporal weighting analyzer 12685. Spatio-temporal weighing analyzer 12685 first selects a weighting table depending on the type of spatial scalability, and next computes an index to this prestored table indicating the best weight or set of weights to be used. The operation can be done once or more per picture. Typically, when employing an MPEG-like coding environment, spatio-temporal weights are adapted on a macroblock by macroblock basis. The index to selected weights for a macroblock appears on line 12695 and is fed to weighter 12710. This index also appears on line 12725 and is encoded as part of the bit-stream in variable and fixed length encoder 12550. Weighter 12710 computes a weighted average of the two predictions input on lines 12690 and 12700 and outputs the result on lines 12720 and 12730 to subtractor 12490 and adder 12780, respectively.

The locally decoded enhancement-layer video, which is needed for motion compensation of the next enhancement-layer frame, is calculated in the same way as in the base-layer except for a few differences. Specifically, the quantized transform coefficients are converted to full range by inverse quantizer 12740, converted to prediction error pel values by inverse transform 12760, added to the motion compensated prediction by adder 12780 and passed to the next-frame store 12620 whose contents can be simultaneously copied to the previous-frame store 12660. If the next frame is a P picture, contents of previous-frame store are needed, if it is a B picture contents of both frame stores are needed for motion estimation. Variable encoder 12550 encodes quantized transform coefficients input on line 12540, quantizer step sizes $QS_E$ input on line 12615, motion vectors $mv_E$ on line 12645 and index of weights on line 12725 into a bit-stream that is output on line 12560. This bit-stream on line 12560 then passes to buffer 12570 for temporary storage until it passes via line 12580 to systems multiplexer 12345.

For purposes of this example a simple encoder is used to illustrate the base and enhancement-layer encoders described above. However, it may desirable that the base-layer encoder be an MPEG-1 or H.261 encoder or an MPEG-2 main-profile encoder. The enhancement-layer encoder is assumed to be an MPEG-2 next-profile spatial scalability encoder which is similar to an MPEG-2 main-profile encoder except for weighter 12710 and spatio-temporal analyzer 12685, which are discussed in detail below.

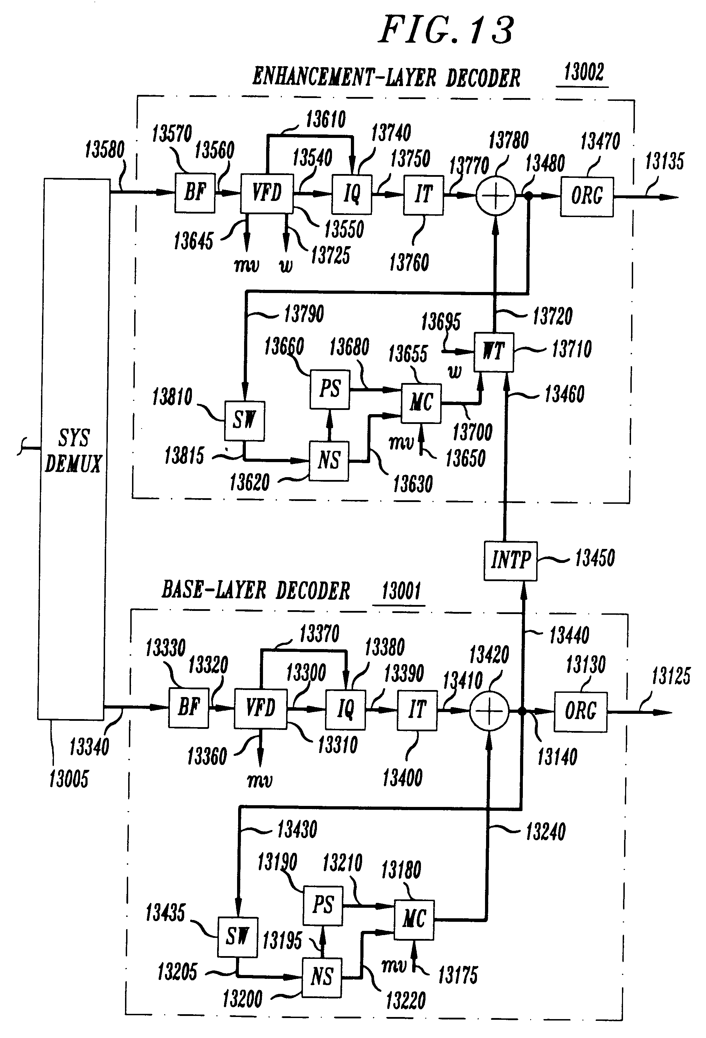

FIG. 13 shows a two-layer decoder consisting of base-layer decoder 13001 and enhancement-layer decoder 13002 corresponding to the coding system of FIG. 1. Base-layer decoder 13001 uses the well known MPEG-1 picture coding arrangement, which for generality, consists of I, B, and P pictures. The received bit-stream on line 13340 passes from the systems demultiplexer to buffer 13330 for temporary storage until it passes via line 13320 to the variable and fixed length decoder 13310. The variable and fixed length decoder 13310 decodes quantized transform coefficients and outputs them on line 13300. Quantizer step size $QS_D$ is outputs on line 13370. Motion vectors $mv_D$ are output on lines 13360 and 13175. Motion compensator 13180 utilizes motion vectors $mv_D$ on line 13175 and pels from previously decoded frames on line 13210 for P pictures and previously decoded frames on lines 13210 and 13220 for B pictures to compute motion compensated prediction that is output on line 13240. For I type frames, motion compensator 13180 outputs zero pel values.

Quantizer step $QS_D$ passes from variable and fixed length decoder 13310 via line 13370 to inverse quantizer 13380. Quantized transform coefficients pass on line 13300 to inverse quantizer 13380. Inverse quantizer 13380 converts the quantized transform coefficients back to full range and passes the result via line 13390 to inverse transformer 13400, which outputs pel prediction error values on line 13410. Adder 13420 adds the prediction error values on line 13410 to the prediction values on line 13240 to form the decoded base-layer pels on lines 13430, 13140 and 13440. For I and P type frames, switch 13435 passes the decoded pels input on line 13430 via line 13205 to the next-picture store 13200. Simultaneously, the frame in next-picture store 13200 passes via line 13195 to previous-picture store 13190. For B type frames, switch 13435 takes no action, and the contents of picture stores 13190 and 13200 remain unchanged. The contents of picture stores 13190 and 13200 pass to motion estimator 13170 and motion compensator 13180 via lines 13210 and 13220 for use as needed as described herein. Frame organizer 13130 reorders the base-layer decoded output frames on line 13140 in preparation for display on line 13125 in the manner well known in the art. The decoded base-layer frames pass via line 13440 to interpolator 13450, as described above, where they are upsampled and passed to enhancement-layer decoder 13002 via line 13460.

The enhancement-layer bit-stream passes from systems demultiplexer 13005 to buffer 13570 via line 13580 for temporary storage until it passes via line 13560 to variable and fixed length decoder 13550. Variable and fixed length decoder 13550 decodes quantized transform coefficients and outputs them on line 13540, quantizer step size $QS_{DE}$ are output on line 13610, motion vectors $mv_{DE}$ are output on lines 13645 and 13650 and an index of weights are output on lines 13725 and 13695. Quantizer step size $QS_{DE}$ passes from line 13610 to inverse quantizer 13740. The inverse quantizer 13740 converts the quantized transform coefficients on line 13540 back to full range and passes the result via line 13750 to inverse transform 13760, which outputs pel prediction error values on line 13770.

Motion compensator 13655 utilizes enhancement-layer motion vectors $mv_{DE}$ on line 13650 and pels from the previously decoded enhancement layer frames on lines 13630 and 13680 to compute a motion compensated prediction that is output on line 13700 and passes to weighter 13710. The decoded base-layer frame is upsampled in interpolator 13450 and applied via line 13460 to the other input to the weighter 13710. Weighter 13710 computes a weighted average of the two predictions input on lines 13460 and 13700 and outputs the result on line 13720 to adder 13780. The weighting used in computing the prediction is the same as that used during the encoding process. The weights are obtained in weighter 13710 by using index of weights available at line 13695 to look up values from a table. The output of adder 13780 is available on lines 13480 and 13790, decoded frame on line 13790. If not a B picture, the output is passed through switch 13810 to line 13815 and stored in the next-picture store 13620 and its contents are simultaneously copied to previous-picture store 13660. The contents of picture stores 13660 and 13620 are used for motion-compensated prediction of subsequent frames. Frame reorganizer 13470 reorders the high resolution video frames on line 13480 to match the order of the base-layer and outputs the result on line 13135 for display.

For purposes of this example a simple decoder is used to illustrate the base and enhancement-layer encoders described above. However, it may be desirable that the base-layer decoder be an MPEG-1 or an H.261 decoder or an MPEG-2 main-profile decoder. The enhancement-layer decoder is assumed to be an MPEG-2 next-profile spatial scalability decoder which is very much like the MPEG-2 main-profile decoder except for weighter 13710, which is discussed in detail below.

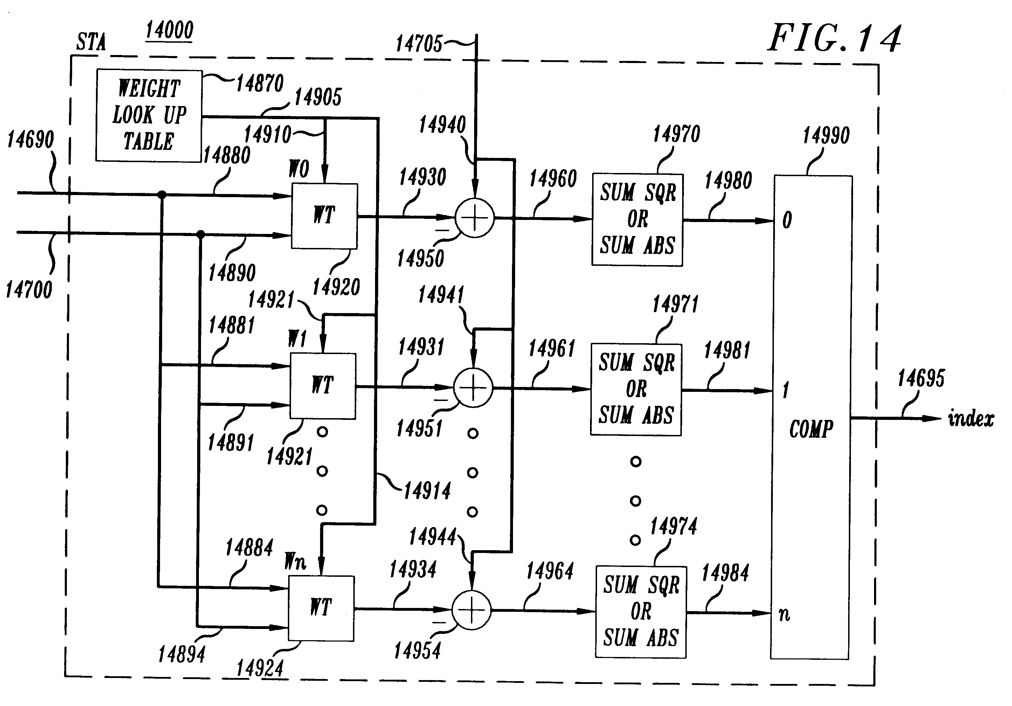

FIG. 14 shows details of the spatio-temporal analyzer employed in FIG. 12. Spatiotemporal analyzer 14000 takes the spatial prediction signal obtained by interpolation of the base-layer signal on line 14690 and the enhancement-layer temporal prediction signal on line 14700. The signal on line 14690 also appears on line 14880 and the signal on line 14700 also appears on line 14890 and thus form two inputs to spatio-temporal weighter 14920. The third input is weight(s) W0 on line 14910. The first entry in the weight look-up table 14870 having contents that are available on line 14905. This process is repeated for spatio-temporal weighter 14921 which takes signal on lines 14690 and 14700 at respective input lines 14881 and 14891, with weight W1 on line 14911, the next entry in the weight look-up table 14870 whose contents are available on line 14905. This process is similarly repeated for all spatio-temporal weighters, where the number of weighters depends on number of entries available to choose from in the weight tables. The spatio-temporal weighted prediction image-blocks are now available on lines 14930, 14931,... 14934 and are differenced in differencers 14950, 14951, ... 14954 from original image-blocks available on lines 14940, 14941, ... 14944, the resulting prediction error blocks are available on lines 14960, 14961,... 14964 and form an input for computation of a single distortion measure per image-block per spatio-temporal prediction. Each distortion measure computed in 14970, 14971,..14974 is either sum of squares or sum of absolute values and is output on lines 14980, 14981.., 14984 and forms inputs to the comparator 14990, which compares all the values and outputs an index on line 14695 corresponding to the smallest value per image-block. If MPEG-1 type coding is employed, an image-block is equivalent to a macroblock. In different contexts, an image-block may be as large as an entire frame or field.

Weight look-up table 14870 contains separate weight tables for the various illustrative forms of spatial scalability (i.e. progressive-to-progressive, interlace-to-interlace, interlace-to-progressive and interlace-to-interlace) and, depending on the form of spatial scalability chosen, a corresponding weight table is selected.

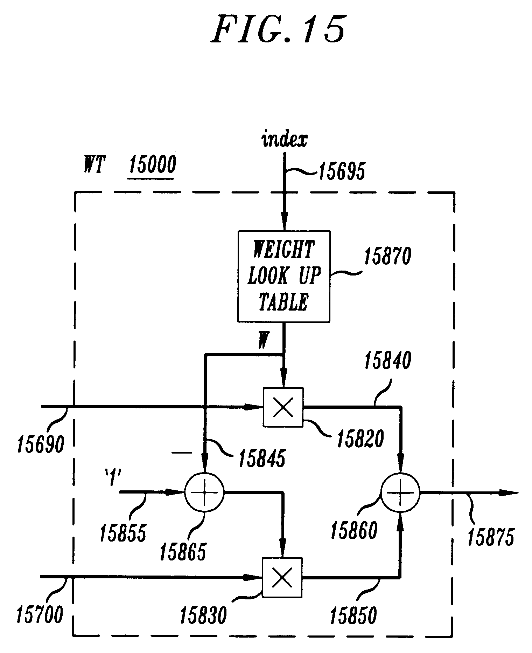

FIG. 15 shows the details of the spatio-temporal weighter employed in FIGS. 12, 13 and 14. Spatio-temporal weighter 15000 takes spatial prediction signal obtained by interpolation of the base-layer signal on line 15690 and the enhancement-layer temporal prediction signal on line 15700. An index input on line 15695 is applied to form an address to the weight table 15870, and the resulting weight(s) on line 15825 are applied to a multiplier 15820 having a spatial prediction signal on line 15690 as its other input. Also, these weight(s) are applied on line 15845 forming an input to the differencer 15865. The other input is forced to value of '1,' and the resulting complementary weight(s) signal appears on the output line 15835, which in turn forms an input to the multiplier 15830. The temporal prediction signal on line 15700 forms the other input to the multiplier 15830. The output of multipliers 15820 and 15830 are appear on lines 15840 and 15850 and form an input to a adder 15860. The output of adder 15860 is the spatio-temporal weighted prediction signal and appears on line 15875.

The above-described invention provides a technique for deriving video images of varying resolutions from a single video source. It will be understood that the particular methods described are only illustrative of the principles of the present invention, and that various modifications could be made by those skilled in the art without departing from the spirit and scope of the present invention, which is limited only by the claims that follow.

## Claims

1. A method of encoding a video signal comprising the steps of:
   receiving a digital video signal including a succession of digital representations related to picture elements of a video image where said digital video signal has a characteristic resolution;
   producing a first encoded version of said received digital video signal having a resolution less than or equal to said characteristic resolution;
   producing a second encoded version of said received digital video signal having a resolution equal to said characteristic resolution;
   producing a first prediction of said video image from said first encoded version of said received digital video signal;
   producing a second prediction of said video image from said second encoded version of said received digital video signal;
   combining said first prediction and said second prediction to produce a combined prediction; and
   employing said combined prediction to encode said second encoded version of said received digital video signal;

2. The method of claim 1 in which said step of producing said first prediction includes producing a spatial prediction.

3. The method of claim 2 in which said step of producing said second prediction includes producing a temporal prediction.

4. The method of claim 3 in which said step of combining includes weighting said spatial prediction and weighting said temporal prediction to produce said combined prediction.

5. The method of claim 1 in which said step of encoding a first encoded version includes encoding an interlaced version of said received digital video signal, or encoding a progressive version of said received digital video signal.

6. The method of claim 5 in which said step of encoding a second encoded version includes encoding an interlaced version of said received digital signal, or encoding a progressive version of said received digital signal.

7. The method of claim 1 in which said step of encoding a first encoded version includes encoding using MPEG-1 coding standards, or encoding using H.261 coding standards, or encoding using MPEG-2 coding standards.

8. The method of claim 7 in which said step of encoding a second encoded version includes encoding using MPEG-2 encoding standards.

9. A method of decoding said first encoded version and said second encoded version of claim 1 for producing an unencoded video signal having at least one of a plurality of predetermined characteristics.

10. The method of claim 9 wherein said at least one of a plurality of predetermined characteristics is resolution scale, or said at least one of a plurality of predetermined characteristics is picture format.

11. An apparatus for encoding a video signal comprising:
    a receiver for receiving a digital video signal including a succession of digital representations related to picture elements of a video image where said digital video signal has a characteristic resolution;
    a means for producing a first encoded version of said received digital video signal having a resolution less than or equal to said characteristic resolution;
    a means for producing a second encoded version of said received digital video signal having a resolution equal to said characteristic resolution;
    a means for producing a first prediction of said video image form said first encoded version of said received digital video signal;
    a means for producing a second prediction of said video image forms said second encoded version of said received digital video signal;

a means for combining said first prediction and said second prediction to produce a combined prediction; and

a means for employing said combined prediction to encode said second encoded version of said received digital video signal.

12. The apparatus of claim 11 in which said means for producing said first prediction includes a means for producing a spatial prediction.

13. The apparatus of claim 12 in which said means for producing said second prediction includes a means for producing a temporal prediction.

14. The apparatus of claim 13 in which said means for combining includes a means for weighting said spatial prediction and a means for weighting said temporal prediction to produce said combined prediction.

15. The apparatus of claim 11 in which said means for encoding a first encoded version includes a means for encoding an interlaced version of said received digital video signal.

16. The apparatus of claim 11 in which said means for encoding a first encoded version includes a means for encoding a progressive version of said received digital video signal.

17. The apparatus of claim 15 or 16 in which said means for encoding a second encoded version includes a means for encoding an interlaced version of said received digital signal.

18. The apparatus of claim 15 or 16 in which said means for encoding a second encoded version includes a means for encoding a progressive version of said received digital signal.

19. The apparatus of claim 11 in which said means for encoding a first encoded version includes a means for encoding using MPEG-1 coding standards, or a means for encoding using H.261 coding standards, or a means for encoding using MPEG-2 coding standards.

20. The apparatus of claim 19 in which said means for encoding a second encoded version includes a means for encoding using MPEG-2 encoding standards.

## FIG. 1

EP 0 644 695 A2

# FIG.2

$SIGIN_D$

DEC

~ 2110

~ 2115

HOR AND VERT
DECIMATOR

~ 2130

$SIGOUT_D$

# FIG.3

$SIGOUT_I$

INTP

~ 3170

~ 3155

HOR AND VERT
INTERPOLATOR

~ 3150

$SIGIN_I$

# FIG.4

$SIGIN_{D2}$

DEC

— 4110

### HOR AND VERT DECIMATOR
4115

— 4105

### PROG TO INTERL DECIMATOR
4125

— 4130

$SIGOUT_{D2}$

# FIG.5

$SIGOUT_{I2}$

INTP

— 5170

### HOR AND VERT INTERPOLATOR
5155

— 5145

### INTERL TO PROG INTERPOLATOR
5165

— 5150

$SIGIN_{I2}$

15

*FIG.6*

$SIGIN_{D3}$

6110

DEC

INTERL TO PROG
INTERPOLATOR                    6165

6105

HOR VERT
DECIMATOR                       6115

6130

$SIGOUT_{D3}$

$SIGOUT_{I3}$

INTP                              7170

HOR
INTERPOLATOR                    7155

7145

1          0
SW                      7245

7255                      7235

7225

ODD                  VERT
INTERPOLATOR AND
7215                 LINE - SELECTOR

1          0

SW

7205          7185

7175                    7195

INTERL TO PROG
INTERPOLATOR            7165

7150

$SIGIN_{I3}$

*FIG.7*

16

# FIG.8

# FIG.9

FIG.10

MC PREDICTION FROM ENHANCEMENT LAYER

# FIG.11

MC PREDICTION FROM
ENHANCEMENT LAYER $\longrightarrow$ 16

LOCALLY DECODED
FROM BASE LAYER $\longrightarrow$ | INTP<br>SPATIAL<br>INTERPOLATOR | $\longrightarrow$ 16

$W=(w1,w2)$

$x(1-w1)$

$x(1-w2)$

$xw1$

$xw2$

EP 0 644 695 A2

FIG.12

# FIG.13

ENHANCEMENT-LAYER DECODER   _13002_

BASE-LAYER DECODER   _13001_

21

*FIG. 14*

STA  14000

WEIGHT LOOK UP TABLE

WT  W0
WT  W1
WT  Wn

SUM SQR OR SUM ABS
SUM SQR OR SUM ABS
SUM SQR OR SUM ABS

COMP

index

14690
14700
14705
14870
14905
14910
14880
14920
14921
14921
14890
14891
14884
14894
14924
14940
14930
14950
14941
14931
14951
14914
14944
14934
14954
14960
14961
14964
14970
14971
14974
14980
14981
14984
14990
14695

0
1
n

# FIG.15